(19) **Europäisches Patentamt**
**European Patent Office**
**Office européen des brevets**

(11) **EP 4 177 099 A1**

(12) **EUROPEAN PATENT APPLICATION**

(43) Date of publication:
**10.05.2023 Bulletin 2023/19**

(21) Application number: **22167929.3**

(22) Date of filing: **12.04.2022**

(51) International Patent Classification (IPC):
**B60L 53/14** (2019.01)   **B60L 53/62** (2019.01)
**B60L 53/68** (2019.01)

(52) Cooperative Patent Classification (CPC):
**B60L 53/14; B60L 53/62; B60L 53/68**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2021 GB 202115962**

(71) Applicant: **Juuce Limited**
**Stowmarket IP14 5AY (GB)**

(72) Inventors:
• **Earl, Richard**
**Stowmarket, IP14 5AY (GB)**
• **Chapman, James**
**Stowmarket, IP14 5AY (GB)**

(74) Representative: **Dummett Copp LLP**
**25 The Square**
**Martlesham Heath**
**Ipswich IP5 3SL (GB)**

(54) **ELECTRIC VEHICLE CHARGING SYSTEM**

(57)    An electric vehicle AC charging system comprising a charging station connected to a source of AC power and including a first processor, the charging station being electrically connectable to an electric vehicle; and a charging station management system including a second processor. The first processor is configured to operate under a first communication protocol to communicate with said electric vehicle to obtain a vehicle ID and an initial state of charge of a vehicle connected to the plug; operate under a second communication protocol to communicate with said electric vehicle to advertise available current to said electric vehicle; measure vehicle power consumption data during charging of the electric vehicle; and operate under a third communication protocol to transmit the vehicle ID and initial state of charge data to the charging station management system and to transmit the vehicle power consumption data to the charging station management system. The second processor is configured to obtain from the charging station the vehicle ID and initial state of charge data, and transmit Charging Data to the charging station.

Fig. 1

**Description**

FIELD OF THE INVENTION

This invention relates to the field of electric vehicle charging. In particular, this invention relates to systems and methods for charging electric vehicles using AC power.

BACKGROUND TO THE INVENTION

There are currently a number of charging systems available to owners of electric vehicles. Furthermore, different electric vehicles have different on-board chargers which allows charging at different speeds and from different power sources, e.g. AC or DC. There are number of different connector types, and the choice or options for which connector type to use is dependent on the charger type and the vehicle's inlet port. Considering the three main connector types, Type 1, Type 2 and CCS (combined charging standard), Type 1 and Type 2 connectors allows AC charging, while a CCS connector is required for DC charging.

DC charging supplies higher power to the electric vehicle resulting in rapid charging times. DC chargers include an AC to DC converter within the charger, making this type of charger very large and expensive.

AC charging typically delivers powers at a lower level which results in slower charging compared to DC chargers. The chargers are, however, less expensive and more compact as they only need to be connected to an AC power supply, for example the national power network. The conversion from AC to DC occurs within the electric vehicle.

Home or domestic charging units therefore tend to be AC charging units due to their lower cost and smaller size. It is also possible, with a suitable connector to plug an electric vehicle into a domestic socket. However, for consumers who are regularly charging a vehicle it is recommended to install a dedicated charging unit.

As more households own electric vehicles there will be an increase in the number of consumers charging their vehicles at home. It is recognised that this may result in an increase in the demand for electricity when owners of electric vehicles return home from work, for example between 5pm and 7pm. This is already a peak time for electricity consumption and this may, therefore, result in additional pressures on the electricity network and supply.

As the number of electric vehicles increases there will, therefore, be an increased demand for electricity, which is likely to result in the requirement for additional investment in electricity networks and infrastructure.

There is a realisation that it would be beneficial to enable or require smart charging of electric vehicles. This involves shifting the time at which the vehicle is charged to a different time of day or night when there is a lower demand for electrical power and lower demand on the electricity network. This may, for example, be during the night or early morning. This not only benefits the power supply network, which is better able to manage and accommodate energy demands, but may also benefit the consumer as they may be able to charge their vehicle at times at which the cost of the electricity is lower.

It is therefore an aim of the present invention to provide a cost-effective charging system for electric vehicles that allows smart charging functionality.

SUMMARY OF THE INVENTION

A first aspect of the invention provides an electric vehicle AC charging system comprising:

- a charging station connected to a source of AC power and including a first processor, the charging station being electrically connectable to an electric vehicle to deliver AC power to the vehicle; and
- a charging station management system including a second processor,

wherein the first processor is configured to:

- operate under a first communication protocol to communicate with said electric vehicle to obtain a vehicle ID and an initial state of charge of a vehicle connected to the plug;
- operate under a second communication protocol to communicate with said electric vehicle to advertise available current to said electric vehicle;
- measure vehicle power consumption data during charging of the electric vehicle;
- operate under a third communication protocol to transmit the vehicle ID and initial state of charge data to the charging station management system; and
- operate under the third communication protocol to transmit the vehicle power consumption data to the charging station management system, and

wherein the second processor is configured to:

- obtain from the charging station the vehicle ID and initial state of charge data;
- transmit Charging Data to the charging station to manage the supply of AC power to the vehicle; and
- calculate an updated state of charge based on the vehicle power consumption data obtained from the charging station.

The system preferably comprises a physical vehicle charging connector electrically connected or connectable to the charging station. The connector preferably comprises a plug for connection to an electric vehicle, the plug including two signalling pins, a protective earth pin, a neutral pin and at least one AC power supply pin.

The charging station management system is preferably remote from the charging station. The charging station management system may be provided by cloud computing. The charging station management system may be in communication with a plurality of charging stations.

In preferred embodiments the updated state of charge (SoC) is calculated using the following equation:

$$\text{Updated SoC} = \text{Initial SoC} + ((\text{power consumed} / f * \text{vehicle battery capacity}) * 100).$$

In which $f$ is a vehicle correction factor based on the efficiency of the battery of the electric vehicle.

The first communication protocol may be in accordance with ISO 15118 or DIN SPEC 70121. The second communication protocol may be in accordance with IEC 61851 or SAE J1772. The third communication protocol may be open charge point protocol (OCPP).

In preferred embodiments the Charging Data comprises an initiation signal to cause the charging station to advertise available current to said electric vehicle. In some embodiments the Charging Data comprises a charging schedule including a charging start time and a charging stop time or a charging start time and a charging duration.

In preferred embodiments the electric vehicle charging system further comprises a user device in communication with the charging station management system. The second processor is preferably configured to transmit the initial state of charge and the updated state of charge to the user device. The initial state of charge and the updated state of charge are preferably displayed on a screen of the user device.

In preferred embodiment the second processor is configured to:

- obtain from the user device user preferences data;
- calculate a charge requirement of the vehicle based on the initial state of charge of the vehicle and a battery capacity determined from the user preferences data or an external data source;
- schedule a start time for vehicle charging based on the calculated charge requirement of the vehicle and the user preferences data; and
- transmit the scheduled start time in the Charging Data.

The user preferences data may include one or more of electrical energy tariff data and vehicle use data.

The second processor may schedule the start time based on third party data including energy demand data or route planning data.

In some embodiments the second processor is configured to schedule a stop time at which vehicle charging is terminated or a duration of charging after which charging is terminated based on the calculated charge requirement of the vehicle and the user preferences data, and transmit the scheduled stop time or duration in the Charging Data. The second processor may be configured to transmit both the scheduled start time and the scheduled stop time or duration to the charging station before current is advertised to the vehicle.

In preferred embodiments the user device is remote from both the charging station management system and the charging station.

A second aspect of the invention provides a method of charging an electric vehicle using a system comprising a charging station and a charging station management system, the method comprising:

- electrically connecting the electric vehicle to the charging station;
- operating the charging station under a first communication protocol to communicate with the electric vehicle to obtain a vehicle ID and an initial state of charge of the electric vehicle;
- transmitting the vehicle ID and initial state of charge data from the charging station to the charging station management system;
- transmitting from the charging station management system to the charging station Charging Data including a time at which the charging station should advertise available current to the electric vehicle;
- operating the charging station under a second communication protocol to advertise available current to the electric vehicle;
- using the charging station to measure vehicle power consumption data during charging of the electric vehicle;
- transmitting the vehicle power consumption data from the charging station to the charging station management system; and
- using the charging station management system to calculate an updated state of charge based on the initial state of charge and the vehicle power consumption data.

The first communication protocol may be in accordance with ISO 15118 or DIN SPEC 70121. The second communication protocol may be in accordance with IEC 61851 or SAE J1772. Communications between the charging station and the charging station management system preferably uses open charge point protocol (OCPP).

In some embodiments the Charging Data preferably comprises a charging schedule including a charging start time and a charging stop time or charging duration.

The method may further comprise transmitting from the charging station management system to a user device the initial state of charge and the updated state of charge, and displaying on a screen of the user device the initial state of charge and the updated state of charge.

The method may further comprise:

- transmitting to the charging station management system user preferences data;
- using the charging station management system to calculate a charge requirement of the vehicle based on the initial state of charge of the vehicle;
- using the charging station management system to schedule a start time for vehicle charging based on the calculated charge requirement of the electric vehicle and the user preferences data; and
- transmitting the scheduled start time in the Charging Data.

In preferred embodiments the method comprises using the charging station management system to schedule a stop time at which vehicle charging is terminated based on the calculated charge requirement of the vehicle and the user preferences data, and transmitting the scheduled stop time in the Charging Data. The charging station management system may transmit both the scheduled start time and the scheduled stop time to the charging station before AC power is supplied to the vehicle.

The user preferences data may include one or more of electrical energy tariff data and vehicle use data.

In preferred embodiments the method further comprises manually entering the user preferences data into a user device.

Preferred and/or optional features of each aspect and embodiment described above may also be used, alone or in appropriate combination, in the other aspects and embodiments also.

BRIEF DESCRIPTION OF THE DRAWINGS

The invention will now be further described by way of example only and with reference to the accompanying drawings, in which like reference signs are used for like features, and in which:

Figure 1 is a schematic diagram illustrating an embodiment of an electric vehicle charging system of the present invention, the charging system comprising a charging station and a charging station management system;

Figure 2 is an example of a state diagram of a communication protocol used for communications between the charging station and an electric vehicle;

Figure 3 is a flow chart showing the operational steps of a preferred embodiment of the charging station of the charging system of Figure 1; and

Figure 4 is a flow chart showing the operational steps of a preferred embodiment of the charging station management system of the charging system of Figure 1.

DESCRIPTION OF THE PREFERRED EMBODIMENTS

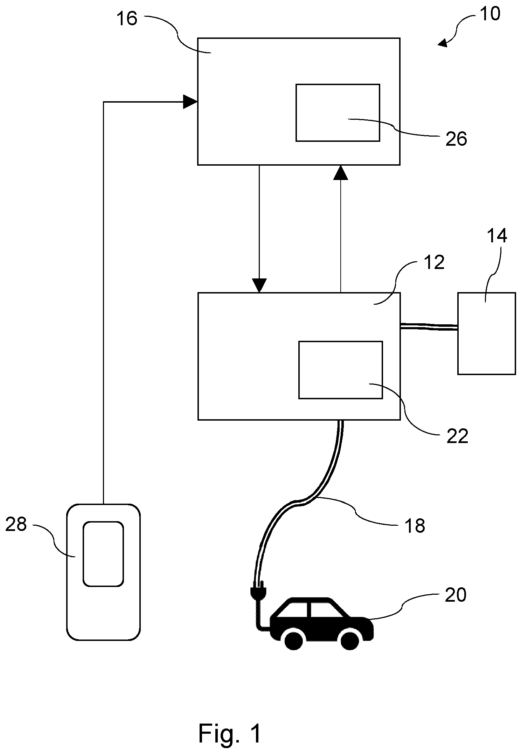

An electric vehicle (EV) charging system 10 according to a preferred embodiment of the present invention is illustrated in Figure 1. The charging system 10 comprises a charging station 12 that is connected to a source of AC (alternating current) power 14. The charging station 12 may be connected to an electric power transmission network, for example the National Grid in Great Britain. In other embodiments the charging station 12 may be connected to any source of AC power, which may be generated from renewable or non-renewable sources. The charging station 12 comprises a first processor 22.

The charging system 10 further comprises a charging station management system 16. The charging station management system 16 is configured to receive signals and data from the charging station 12 and to transmit signals and data to the charging station 12. The charging station management system 16 is preferably located remote from the charging station 12. The charging station management system 16 may be located on a cloud server. The charging station management system 16 comprises a second processor 26.

Communications between the charging station management system 16 and the charging station 12 preferably use the open charge point protocol (OCPP). Currently there are two versions of OCPP, 1.6 and 2.0, and either may be used for communications between the charging station management system 16 and the charging station 12. In other embodiments, communications between the charging station management system 16 and the charging station 12 may use any suitable proprietary communication protocol.

In some embodiments there may be a local controller in communication with both the charging station 12 and the charging station management system 16. The local controller may include a third processor. Communications between the charging station 12 and the charging station management system 16 may be relayed through or transmitted via the local controller and third processor. In some embodiments the local controller may be in communication with a plurality of charging stations 12, and the charging station management system 16 may be in communication with a plurality of local controllers. Communication between the charging station 12 and the local controller, and between the local controller and the charging station management system 16 preferably uses the open charge point protocol (OCPP) or any suitable proprietary communication protocol.

A vehicle charging connector 18 is electrically connected or is electrically connectable to the charging station 12. The connector 18 may form a physical connection between the charging station 12 and an electric vehicle 20, and therefore may comprise a plug for connection to the electric vehicle 20. In other embodiments the vehicle charging connector 18 may facilitate wireless charging. In this way the vehicle charging connector 18 provides an electrical connection without a physical (plug) connection. The connector 18 is configured to permit a flow of AC current from the charging station 12 to the electric vehicle 20. The connector 18 is also configured to permit signals and data to be transmitted from the electric vehicle 20 to the charging station 12 and from the charging station 12 to the electric vehicle 20. In preferred embodiments the plug includes two signalling pins, a protective earth pin, a neutral pin and at least one AC power supply pin. In some embodiments the plug includes a single AC power supply pin such that the electric vehicle 20 may be charged using single-phase AC power. Single phase AC electrical systems with 120V or 240V are used, for example, in North America and Japan. In other embodiments the plug includes three AC power supply pins such that the electric vehicle 20 may be charged using three-phase AC power. Three phase AC electrical systems are used, for example, in Europe. The plug may be a Type 1 plug (SAE J1772), a Type 2 plug (IEC 62196) or a CCS (combined charging standard) plug.

The electric vehicle 20 comprises an electric vehicle (EV) controller that manages the power electronics around the battery of the electric vehicle 20 and an electric vehicle communication controller (EVCC) that manages high level communications with the charging station 12. The charging station 12 comprises a supply equipment communication controller (SECC) that manages high level communication between the charging station 12 and the electric vehicle 20 and an electric vehicle supply equipment (EVSE) controller that manages power electronics and safety functions within the charging station 12.

The charging station 12 is configured to communicate with the electric vehicle 20 using two different communication protocols. During a first phase of the operation of the charging system 10 the charging station 12 will communicate with the electric vehicle 20 using a first communication protocol and during a second phase of the operation of the charging system 10 the charging station 12 will communicate with the electric vehicle 20 using a second communication protocol. The first communication protocol is preferably in accordance with ISO 15118, but in other embodiments may be in accordance with DIN SPEC 70121. The second communication protocol is preferably in accordance with IEC 61851, but in other embodiments may be in accordance with SAE J1772.

Communications between the charging station 12 and the electric vehicle 20 using the second communication protocol are preferably defined by a state machine.

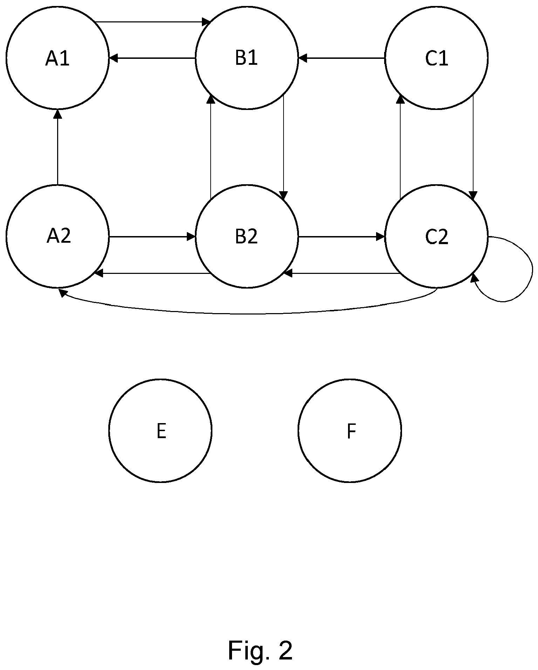

An example of such a state machine is shown in Figure 2, with the states defined as follows:

State A1 - Electric vehicle not connected, charging station not ready to supply AC power
State A2 - Electric vehicle not connected, charging station ready to supply AC power
State B1 - Electric vehicle connected, charging station not ready to supply AC power
State B2 - Electric vehicle connected, charging station ready to supply AC power
State C1 - Electric vehicle connected and ready to receive AC power, charging station not ready to supply AC power
State C2 - Electric vehicle connected and ready to receive AC power, charging station ready to supply AC power
State E - results from an error condition, e.g. no power to charging station due to power outage, or short circuit

State F - signalling state used by charging station to indicate a fault condition, e.g. maintenance of the charging station is required.

Communications between the charging station 12 and the electric vehicle 20 (e.g. between SECC and EVCC) using the first communication protocol are more complex than under the second communication protocol. The first communication protocol includes State A (no electric vehicle connected), State B (electric vehicle connected but not ready to charge) and State C (electric vehicle connected and ready to charge). Under the first communication protocol, while in State B, a number of communications or messages are transmitted between the electric vehicle 20 (EVCC) and the charging station 12 (SECC). These communications or messages preferably include:

SessionSetupReq - EVCC transmits vehicle ID to SECC;
SessionSetupRes - SECC transmits response message to EVCC;
ChargeParameterDiscoveryReq - EVCC transmits state of charge data to SECC; and
ChargeParameterDiscoveryRes - SECC transmits response message to EVCC.

The communications or messages transmitted between the electric vehicle 20 (EVCC) and the charging station 12 (SECC) in State B may include a number of other communications to permit other data to be transmitted between the electric vehicle 20 and the charging station 12.

The charging system 10 of this embodiment further comprises a user device 28 in communication with the charging station management system 16. In this embodiment the user device 28 is shown as being remote or separate from other hardware of the charging system 10. The user device 28 may, for example, be in the form of a mobile phone, a computer or other similar device. The user device 28 preferably includes a keyboard, keypad or touchscreen to allow a user to input data into the user device 28. The user device 28 preferably includes a screen to display data including, amongst other things, electric vehicle profile data and electric vehicle status data, as well as displaying other options, selections and settings to a user. In other embodiments the user device 28 may be part of the charging station 12, such that the charging station 12 comprises at least a touchscreen.

When a new charging station 12 is installed at a location, the user device 28 may be used to enter data required for an initial site configuration. The site configuration or new charging station configuration may require a user to select one of a number of modes of operation of the charging station 12. Once selected, the mode of operation may remain the same for the entire life of the charging station 12. Alternatively, the mode of operation may be changed by transmitting a new site configuration to the charging station 12.

The charging station 12 preferably has at least three modes of operation:

First Mode - immediate start;
Second Mode - delayed start; and
Third Mode - scheduled charging.

These modes of operation are described further below.

At least the second and third modes of operation may require a user to input preferences into the charging system 10, and/or to select options or settings provided in the charging station management system 16.

The user device 28 therefore preferably allows a user to input preferences into the charging system 10. These preferences may be, for example, times at which charging is preferred due, for example, to a lower energy cost. The user may, for example, input data relating to their energy/electricity tariff detailing the rates paid at different times of day. The user device 28 may also allow a user to input data including:

- a departure time - i.e. a time at which a user next wishes to use the vehicle and by which it must have sufficient or full charge;
- a range - i.e. a distance that the vehicle is likely to travel during the next day (before a subsequent charge);
- a required charge - i.e. a value for the desired state of charge of the battery, e.g. 80% charged, 90% charged or 100% (fully) charged;
- a charge cap - i.e. a maximum amount of AC power that can be used to charge the vehicle so as to cap the amount paid.

The user may input their preferences or selections from a number of pre-set options or saved options. The user device 28 or the charge station management system 16 may store one or a number of default parameters or options. For example, the user device 28 or charge station management system 16 may store user preferences associated with week day use of the electric vehicle 20 and user preferences associated with weekend use of the electric vehicle 20.

The charging station management system 16 is configured to receive this user input data from the user device 28 and to use this data to manage the power supplied by the charging station 12 to the electric vehicle 20 in at least the second and third modes of operation of the charging station 12.

The charging station management system 16 may additionally or alternatively be configured to receive data from external or third party data sources. For example, the charging station management system 16 may receive energy demand data from an external data source. The energy demand data may include predictions of electricity usage during a forthcoming period of time. The energy demand data may be used by the charging station management system 16 to schedule charging of the electric vehicle 20 during preferred time periods, for example during off-peak times of electricity demand or during times when there is an excess of on-site power from renewable sources such as from solar panels. The charging station management system 16 may receive vehicle or battery data from an external data source. The vehicle or battery data may include the capacity of the battery of the electric vehicle 20.

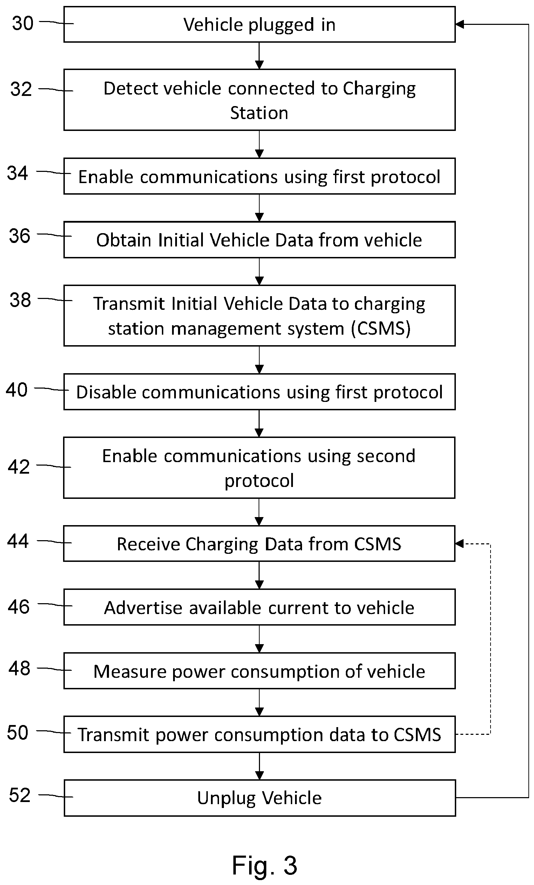

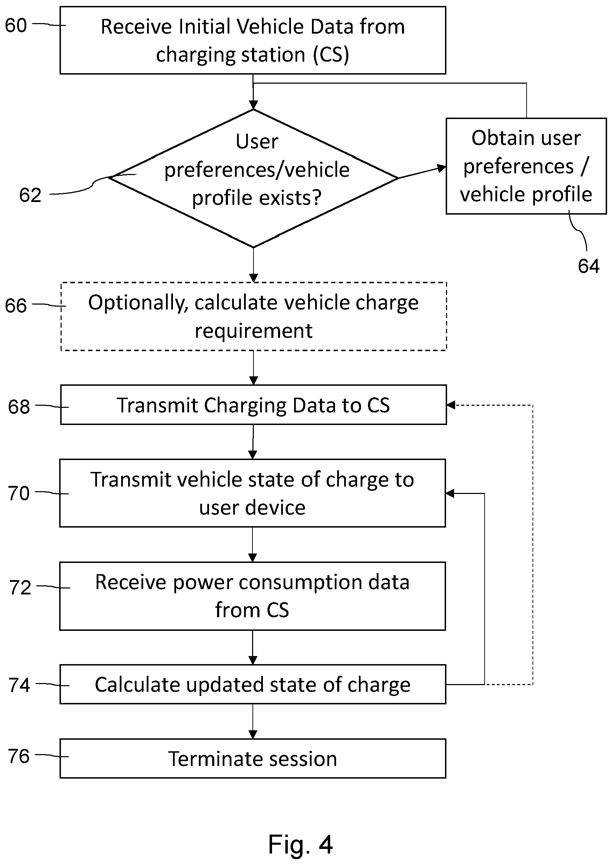

Referring now to Figures 3 and 4, the operation of the charging system 10 to charge an electric vehicle 20 will now be described.

At step 30 an electric vehicle 20 is plugged into the charging station 12 or is otherwise electrically connected to the charging station 12. The connector 18 provides a power connection and a communication connection between the electric vehicle 20 and the charging station 12. The processor 22 of the charging station 12 detects 32 that an electric vehicle 20 has been connected and the charging station 12 moves from State A to State B or B1 (EV connected, not ready to charge).

The processor 22 enables communication 34 between the electric vehicle 20 and the charging station 12 using the first communication protocol. The charging station 12 enters State B of the first communications protocol. The charging station 12 obtains 36 Initial Vehicle Data from the electric vehicle 20 preferably by power line communication via the signalling pins. The Initial Vehicle Data comprises at least a unique vehicle identifier (ID) and an initial state of charge of the electric vehicle 20 connected to the connector 18. The Initial Vehicle Data may additionally include a make of the vehicle, a model of the vehicle, and the size of the battery in the electric vehicle.

In preferred embodiments communications between the EVCC and the SECC are established and the EVCC transmits to the SECC SessionSetupReq data including the unique vehicle ID and ChargeParameterDiscoveryReq data including the state of charge of the battery of the electric vehicle 20.

The charging station 12 then transmits 38 the Initial Vehicle Data to the charging station management system 16. As described above, this may be using OCPP or another proprietary communication protocol. Once this initial data has been collected from the electric vehicle 20 by the charging station 12, the charging station 12 disables communication 40 using the first protocol and then enables communication 42 between the electric vehicle 20 and the charging station 12 using the second communication protocol. In preferred embodiments the charging station 12 enters State E or State F, before reverting to State B1.

In embodiments in which the first communication protocol is ISO 15118, it will be appreciated that after transmission of the state of charge data from the EVCC to the SECC the electric vehicle 20 will be expecting to receive DC power from the charging station 12. It is therefore necessary to affect a transition from the first communication protocol to the second communication protocol such that the electric vehicle 20 is ready to accept AC power from the charging station 12. In preferred embodiments the session under the first communication protocol is terminated by the SECC transmitting the ChargeParameterDiscoveryRes message with an error condition. The EVCC, in response to this error condition message, may then terminate the session. The charging station 12 moves to State E or State F, before reverting to State B1 or State B2.

Referring now to Figure 4, when a user connects an electric vehicle 20 to the charging station 12 for the first time the user is preferably prompted by the charging station management system 16 to create a vehicle profile, and possibly a user profile. The unique vehicle identifier is received 60 by the charging station management system 16 and the second processor 26 or the charging station management system 16 determines 62 whether that vehicle has been connected to the charging station 12 on a previous occasion, i.e. whether there is a vehicle profile linked to that unique vehicle identifier. If the charging station management system 16 determines that the vehicle has not been connected before, i.e. that there is no linked vehicle profile, then the charging station management system 16 transmits a signal to the user device 28 requesting the user to create 64 a vehicle profile. The vehicle profile may include data such as the make of the vehicle, the model of the vehicle, the registration number of the vehicle, the vehicle's battery capacity or battery size, and a description of the vehicle including, for example, a colour of the vehicle. The charging station management system 16 may also transmit a signal to the user device 28 requesting the user to select or create a user profile. The user profile may include data such as a name and contact details, for example a telephone number or email address. The user may be able to assign or link a vehicle profile to a user profile. The user profile may also include one or more of the user preferences described above. The user may be the vehicle owner and/or the driver of the vehicle. The user may be a company or organisation that owns and manages several vehicles or a fleet of vehicles as described below. In some examples, some user data may be entered and managed by the company or organisation, and some user data may be entered or confirmed by the vehicle driver when the vehicle is connected to the charging station 12.

The charging station management system 16 then links the vehicle profile, and optionally additionally the user profile, to the unique vehicle identifier.

If, when the unique vehicle identifier is transmitted to the charging station management system 16, the charging station management system 16 determines that a linked vehicle profile already exists, the charging station management system 16 preferably displays these vehicle details on the screen of the user device 28. The charging station management system 16 may prompt the user to confirm that these details are correct before vehicle charging is commenced.

Operation of the charging station 12 then preferably continues in one of the modes of operation mentioned above.

First Mode

If the charging station 12 has been configured to operate in the first mode of operation (immediate start), the charging station management system 16 will transmit 68 to the charging station 12 Charging Data in the form of an initiation signal to cause the charging station 12 to advertise 46 available current to the electric vehicle 20. In some embodiments this means that the state machine switches from State B1 to State B2.

In this first mode of operation, therefore, the charging station 12 receives 44 Charging Data from the charging station management system 16 in the form of an initiation signal that causes the charging station 12 to immediately advertise 46 available current to the electric vehicle 20. It will be appreciated that the receiving 44 of the Charging Data from the charging station management system 16 may occur before or after disabling of communications using the first communication protocol and before or after enabling of communications using the second communication protocol; however, it will be understood that current is advertised 46 under the second communication protocol.

The charging station management system 16 preferably transmits 70 the initial state of charge of the electric vehicle 20 to the user device 28, and the initial state of charge is preferably displayed on the screen of the user device 28.

When the electric vehicle is ready to charge, the EV controller transitions to State C, and the vehicle draws AC power from the charging station 12 to charge the vehicle battery.

While the electric vehicle 20 is charging, the charging station 12 measures 48 the power consumed by the electric vehicle 20. The charging station 12 then transmits 50 power consumption data to the charging station management system 16. The charging station management system 16 receives 72 the power consumption data and uses the initial state of charge data, the power consumption data and battery capacity data to calculate 74 an updated or current state of charge of the vehicle 20.

The updated state of charge (SoC) may be obtained using the following equation:

$$\text{Updated SoC} = \text{Initial SoC} + ((\text{power consumed} \, / \, f * \text{battery capacity}) * 100).$$

In which *f* is a vehicle correction factor based on the efficiency of the battery of the electric vehicle. The battery capacity may be obtained from the vehicle ID data. In some embodiments the electric vehicle 20 may transmit the battery capacity data to the charging station during communications using the first communication protocol. The vehicle ID data or SessionSetupReq data may include the battery capacity. In other embodiments the vehicle ID or SessionSetupReq data includes the make and model of the electric vehicle, or another vehicle identifier, and the charging station management system 16 may obtain the battery capacity data from a database. The database may be stored in the charging station management system 16 or may be external to the charging station management system 16. The battery capacity data may be received from a third party data source or may be input by the user as described above.

The charging station management system 16 preferably transmits 70 the updated state of charge of the electric vehicle 20 to the user device 28, and the updated state of charge is preferably displayed on the screen of the user device 28.

The charging station 12 continues to measure 48 the power consumed by the electric vehicle 20 and transmit 50 the power consumption data to the charging station management system 16 until the electric vehicle battery is fully charged or until the electric vehicle 20 has sufficient charge. The electric vehicle 20 then terminates the session and stops drawing AC power from the charging station 12. The electric vehicle 20 may then be unplugged 52 from the charging station 12. The EV controller moves to State A.

When the supply of AC power to the electric vehicle 20 is terminated such that the power consumption is zero, the charging station management system 16 terminates 76 the current vehicle session.

Second Mode

If the charging station 12 has been configured to operate in the second mode of operation (delayed start), after receiving 60 the Initial Vehicle Data the charging station management system 16 either looks up stored user preferences associated with the vehicle profile or the user profile associated with the unique vehicle identifier or receives 64 user preferences from the user device 28. The user preferences, as described above, may include tariff data, a departure time, required charge and a range.

The charging station management system 16 then calculates 66 the charge requirement of the electric vehicle 20. The charge requirement is the amount of power needed by the electric vehicle 20 to reach a specified level of charge. This charge requirement may be the amount of power required to fully charge the battery or the amount of power required to charge the battery to 90% charged for example. This percentage value may be a user preference (required charge), as described above. The calculated charge requirement will also be dependent on the battery capacity data.

The charging station management system 16 then uses the user preferences, the calculated charge requirement, and optionally the energy demand data or data from other external sources (discussed further below), to schedule charging at a suitable time. For example, if the calculated charge requirement determines that the car will require 6 hours of charging at a specific power level, and the user parameters specify that the user will next need to use the car at 8am and that a lower electricity tariff is available between midnight and 7am, the charging station management system 16 may determine that charging should start at 12.15am.

The charging station management system 16 may additionally calculate a time at which charging should stop based upon the calculated charge requirement and an estimate current level at which the electric vehicle 20 will draw AC power from the charging station 12.

When the determined charging start time is reached the charging station management system 16 transmits 68 to the charging station 12 Charging Data in the form of an initiation signal to cause the charging station 12 to advertise 46 available current to the electric vehicle 20. In some embodiments this means that the state machine switches from State B1 to State B2.

In this second mode of operation, therefore, the charging station 12 receives 44 Charging Data from the charging station management system 16 in the form of an initiation signal at the start time determined by the charging station management system 16 based on Initial Vehicle Data and user preferences.

The charging station management system 16 preferably transmits 70 the initial state of charge of the electric vehicle 20 to the user device 28, and the initial state of charge is preferably displayed on the screen of the user device 28. The charging station management system 16 may also transmit to the user device 28 the determined charging start time, so that the user knows that their vehicle is scheduled to begin charging at a specified time. The charging station management system 16 may also transmit to the user device 28 the determined charging stop time.

When the charging station 12 advertises 46 available current, the EV controller transitions to State C, and the vehicle draws AC power from the charging station 12 to charge the vehicle battery.

While the electric vehicle 20 is charging, the charging station 12 measures 48 the power consumed by the electric vehicle 20. The charging station 12 then transmits 50 power consumption data to the charging station management system 16. The charging station management system 16 receives 72 the power consumption data and uses the initial state of charge data and the power consumption data to calculate 74 an updated or current state of charge of the vehicle 20, as described above.

The charging station management system 16 preferably transmits the updated state of charge of the electric vehicle 20 to the user device 28, and the updated state of charge is preferably displayed on the screen of the user device 28.

The charging station 12 continues to measure 48 the power consumed by the electric vehicle 20 and transmit 50 the power consumption data to the charging station management system 16 until the electric vehicle battery is fully charged or until the electric vehicle 20 has sufficient charge.

In this second mode of operation of the charging station 12, the charging session may be terminated in one of two ways. Either the electric vehicle 20 terminates the session and stops drawing AC power from the charging station 12 as described above in relation to the first mode of operation, or the charging station management system 16 transmits at the calculated charging stop time a termination signal to the charging station 12 to stop the charging station 12 supplying AC power to the electric vehicle 20 thereby terminating the session.

While the charging station management system 16 is receiving 72 the power consumption data from the charging station 12, the charging station management system 16 may recalculate the time at which charging should be stopped. This recalculation may be necessary if, for whatever reason, the electric vehicle 20 draws a different amount of AC power, for example at a different current level, than was initially determined by the charging station management system 16.

Once the charging session has been terminated the electric vehicle 20 may be unplugged 52 from the charging station 12. The EV controller moves to State A.

When the supply of AC power to the electric vehicle 20 is terminated such that the power consumption is zero, the charging station management system 16 terminates 76 the current vehicle session.

Third Mode

If the charging station 12 has been configured to operate in the third mode of operation (scheduled charging), after receiving 60 the Initial vehicle Data the charging station management system 16 either looks up stored user preferences associated with the vehicle profile or the user profile associated with the unique vehicle identifier or receives 64 user preferences from the user device 28. The user preferences, as described above, may include tariff data, a departure time, required charge and a range.

The charging station management system 16 then calculates 66 the charge requirement of the electric vehicle 20. The charge requirement is the amount of power needed by the electric vehicle 20 to reach a specified level of charge. This charge requirement may be the amount of power required to fully charge the battery or the amount of power required to charge the battery to 90% charged for example. This percentage value may be a user preference (required charge), as described above. The calculated charge requirement will also be dependent on the battery capacity data.

The charging station management system 16 then uses the user preferences, the calculated charge requirement, and optionally the energy demand data or data from other external sources (discussed further below), to schedule charging at a suitable time, as described above in relation to the second mode of operation. In particular, the charging station management system 16 calculates a charging start time and a charging stop time or a duration of charging.

The charging station management system 16 transmits 70 to the charging station 12 Charging Data comprising the calculated charging start time at which the charging station 12 should advertise 46 available current to the electric vehicle 20, and the calculated stop time at which the charging session should be terminated or a calculated duration of charging.

In this third mode of operation, therefore, the charging station 12 receives 44 Charging Data from the charging station management system 16 in the form of a charging schedule including a start time and a stop time or duration determined by the charging station management system 16 based on Initial Vehicle Data, user preferences, and possibly external data sources.

The charging station management system 16 preferably transmits 70 the initial state of charge of the electric vehicle 20 to the user device 28, and the initial state of charge is preferably displayed on the screen of the user device 28. The charging station management system 16 may also transmit to the user device 28 the charging schedule, so that the user knows when their vehicle is scheduled to begin charging and end charging. This charging schedule may be displayed on the screen of the user device 28.

At the specified charging start time the charging station 12 advertises available current to the electric vehicle, the EV controller transitions to State C, and the vehicle draws AC power from the charging station 12 to charge the vehicle battery.

While the electric vehicle 20 is charging, the charging station 12 measures 48 the power consumed by the electric vehicle 20. The charging station 12 then transmits 50 power consumption data to the charging station management system 16. The charging station management system 16 uses the initial state of charge data and the power consumption data to calculate 74 an updated or current state of charge of the vehicle 20.

The charging station management system 16 preferably transmits 70 the updated state of charge of the electric vehicle 20 to the user device 28, and the updated state of charge is preferably displayed on the screen of the user device 28.

While the charging station management system 16 is receiving the power consumption data from the charging station 12, the charging station management system 16 may recalculate the time at which charging should be stopped or the duration for which charging should continue. This recalculation may be necessary if, for whatever reason, the electric vehicle 20 draws a different amount of AC power, for example at a different current level, than was initially determined by the charging station management system 16. The charging station management system 16 may transmit 68 the updated charging stop time or updated duration to the charging station 12.

At the specified charging stop time or after the specified duration has elapsed the charging station 12 terminates the charging session. Once the charging session has been terminated the electric vehicle 20 may be unplugged 52 from the charging station 12. The EV controller moves to State A.

When the supply of AC power to the electric vehicle 20 is terminated such that the power consumption is zero, the charging station management system 16 terminates 76 the current vehicle session.

Importantly, in this third mode of operation the charging station management system 16 transmits to the charging station 12 Charging Data including both the calculated start time and the calculated end time or duration for the charging session before the charging session begins. As such, even if communications between the charging station 12 and the charging station management system 16 are lost after transmission of the charging schedule, for example due to a loss of internet connection, the charging station 12 is able to manage the supply of AC power to the electric vehicle 20 based on the transmitted charging schedule.

It will be appreciated that in all modes of operation the system 10 of the present invention allows the charging station management system 16 to obtain the state of charge of the vehicle. Initially this is by communications between the charging station 12 and the electric vehicle using the first communication protocol (to establish an initial state of charge) and then subsequently by calculation through measurement of the power consumption of the electric vehicle during charging. This allows the charging station management system 16 to manage the power supplied to the charging station 12 and to the electric vehicle 20.

Furthermore, by transmitting the initial state of charge and the updated state of charge to the user device, the charging system 10 allows a user to know the current state of charge of their vehicle at any time. Accordingly, if, for example, a user needs to use their vehicle unexpectedly, they will know how much charge the vehicle has and whether

EP 4 177 099 A1

this is sufficient to complete the journey they need to take.

In some embodiments it is envisaged that the electric vehicle (EV) charging system will be used by more than one user and will be used to charge more than one vehicle. For example, many households now own two or more cars, both of which may be electric vehicles requiring charging. In another example the electric vehicle (EV) charging system may be installed at a commercial premises to be used by fleet vehicles or by employees of the commercial establishment to charge their vehicles.

In these embodiments the charging station management system may store a plurality of vehicle profiles and a plurality of user profiles. For example User A may be able to select a vehicle profile linked to their vehicle, for example a BMW i3, and User B may be able to select a vehicle profile linked to their vehicle, for example a Renault Zoe. The user device or the charging station management system may also store different profiles or preferences for different vehicles. For example, week day and weekend usage of each of the vehicles may be different.

In embodiments in which a user, for example in the form of a company or organisation, owns several charging stations, all of the charging stations may be in communication with a single charging station management system. As described above, this may be via a local controller. Furthermore, in embodiments in which a user owns several charging stations and a number of vehicles, such as the example of a company owning a fleet of vans, the charging station management system may transmit to the user device (so that it can display on the screen of the user device) details regarding which vehicle is charging at which charging station, so that the user can, for example, manage allocation and running of the fleet of vehicles.

In an embodiment in which the charging station management system 16 is in communication with a plurality of linked charging stations 12, for example charging stations 12 all owned by a single company or organisation, the charging station management company 16 may manage charging of each vehicle 20 connected to one of the charging stations 12 based not only on data from that charging station 12 and that vehicle, but also data from the other charging stations 12 and any vehicles 20 connected to them. The charging station management system 16 may also use data from third party or external sources to schedule charging.

In one example, a fleet of vehicles may be connected to a plurality of charging stations 12. It will be appreciated that each vehicle will have a different initial state of charge and a different charge requirement. The charge requirement may be based on user data or user preferences that includes fleet route planning data, i.e. planned delivery routes or the like. Alternatively this fleet route planning data may be received from a third party data source. The charging station management system 16 then calculates a charging schedule for each vehicle 20 at each charging station 12 based on the initial state of charge of that vehicle, vehicle data such as battery capacity, a calculated charge requirement that may include route planning data, and optionally other user preferences. The charging schedules may also be calculated considering local, regional or national energy demand.

In some embodiments it may be necessary for the charging station management system 16 to react to data from an external data source relating to local, regional or national energy demand after charging of the electric vehicle 20 has started, or after a charging schedule has been transmitted to the charging station 12. For example, the charging station management system 16 may receive data from an electric power transmission network that requires that the charging station halts charging or reduces the amount of current supplied to the electric vehicle due to disruption to or fluctuations in the available power.

Accordingly, in some embodiments the charging station management system 16, in reaction to data received from an external data source, may transmit to the charging station 12 a termination signal to cause the charging station 12 to stop supplying AC power to the electric vehicle 20. This termination signal may be sent before the scheduled stop time or before the end of the charging duration. In other embodiments the charging station management system 16 may recalculate the time at which charging should be stopped in reaction to data received from an external data source. The charging station management system 16 may then transmit the updated stop time, updated charging duration or updated charging schedule to the charging station 12.

As described above, in preferred embodiments the charging station management system calculates an updated state of charge and then, optionally, transmits this updated state of charge to the user device. In some embodiments the charging station 12 may, after advertising available current to the electric vehicle 20, and after charging has commenced, revert to the first communication protocol for communication with the electric vehicle 20. In these embodiments, therefore, the charging station 12 disables communication using the second protocol and then enables communication between the electric vehicle 20 and the charging station 12 using the first communication protocol. Under the first communication protocol the charging station 12 then obtains the state of charge of the electric vehicle. The charging station 12 may then revert to the second communication protocol.

The charging station 12 preferably transmits the obtained state of charge of the vehicle to the charging station management system 16. The charging station management system 16 may then compare the obtained state of charge with the calculated updated state of charge. If the obtained state of charge is different to the calculated updated state of charge, the charging station management system 16 may transmit the obtained state of charge to the user device 28. Additionally, the charging station management system 16 will use the obtained state of charge in place of the initial

11

state of charge in subsequent calculations to calculate an updated state of charge.

In some embodiments the charging station 12 may switch between the first communication protocol and the second communication protocol at regular intervals during charging of the electric vehicle 20, for example once every hour. The obtained state of charge of the vehicle may then be periodically, and possibly regularly, transmitted from the charging station 12 to the charging station management system 16. The obtained state of charge of the vehicle may be periodically, and possibly regularly, transmitted from the charging station management system 16 to the user device 28. The charging station 12 may respond to a request from the user device 28 or the charging station management system 16 to enable communication under the first communication protocol to obtain the state of charge of the vehicle 20 at a requested time.

The electric vehicle (EV) charging system of the present invention provides an ability to utilise smart charging in an AC charging station. The present invention therefore provides a smart charging system having a relative low cost and low complexity. The electric vehicle (EV) charging system of the present invention may be installed, for example, in domestic properties, in residential areas (for example for use by a group of residents of a block of apartments), at a commercial premises for charging fleet vehicles, or in publicly accessible places such as in car parks and the like.

Other modifications and variations not explicitly disclosed above may also be contemplated without departing from the scope of the invention as defined in the appended claims.

**Claims**

1. An electric vehicle AC charging system comprising:

    - a charging station connected to a source of AC power and including a first processor, the charging station being electrically connectable to an electric vehicle to deliver AC power to the vehicle; and
    - a charging station management system including a second processor,

    wherein the first processor is configured to:

    - operate under a first communication protocol to communicate with said electric vehicle to obtain a vehicle ID and an initial state of charge of a vehicle connected to the plug;
    - operate under a second communication protocol to communicate with said electric vehicle to advertise available current to said electric vehicle;
    - measure vehicle power consumption data during charging of the electric vehicle;
    - operate under a third communication protocol to transmit the vehicle ID and initial state of charge data to the charging station management system; and
    - operate under the third communication protocol to transmit the vehicle power consumption data to the charging station management system, and

    wherein the second processor is configured to:

    - obtain from the charging station the vehicle ID and initial state of charge data; and
    - transmit Charging Data to the charging station to manage the supply of AC power to the vehicle.

2. An electric vehicle charging system as claimed in Claim 1, in which the second processor is further configured to calculate an updated state of charge based on the vehicle power consumption data obtained from the charging station.

3. An electric vehicle charging system as claimed in Claim 1 or Claim 2, comprising a vehicle charging connector electrically connected or connectable to the charging station and comprising a plug for connection to an electric vehicle, the plug including two signalling pins, a protective earth pin, a neutral pin and at least one AC power supply pin.

4. An electric vehicle charging system as claimed in any preceding claim, in which the charging station management system is remote from the charging station.

5. An electric vehicle charging system as claimed in Claim 2, in which the updated state of charge is calculated using the following equation:

Updated SoC = Initial SoC + ((power consumed / $f$ * battery capacity) * 100)

and in which $f$ is a vehicle correction factor based on the efficiency of the battery of the electric vehicle.

6. An electric vehicle charging system as claimed in any preceding claim, in which the first communication protocol is in accordance with ISO 15118 or DIN SPEC 70121, the second communication protocol is in accordance with IEC 61851 or SAE J1772, and the third communication protocol is open charge point protocol (OCPP).

7. An electric vehicle charging system as claimed in any preceding claim, in which the Charging Data comprises an initiation signal to cause the charging station to advertise available current to said electric vehicle or the Charging Data comprises a charging schedule including a charging start time and a charging stop time or a charging start time and a charging duration.

8. An electric vehicle charging system as claimed in any preceding claim, further comprising a user device in communication with the charging station management system, and in which the second processor is configured to transmit the initial state of charge and the updated state of charge to the user device and the initial state of charge and the updated state of charge are displayed on a screen of the user device.

9. An electric vehicle charging system as claimed in Claim 8, in which the second processor is configured to:

   - obtain from the user device user preferences data;
   - calculate a charge requirement of the vehicle based on the initial state of charge of the vehicle and a battery capacity determined from the user preferences data or an external data source;
   - schedule a start time for vehicle charging based on the calculated charge requirement of the vehicle, the user preferences data and, optionally, third party data including energy demand data or route planning data; and
   - transmit the scheduled start time in the Charging Data.

10. An electric vehicle charging system as claimed in Claim 9, in which the second processor is configured to:

   - schedule a stop time at which vehicle charging is terminated or a duration of charging after which charging is terminated based on the calculated charge requirement of the vehicle and the user preferences data; and
   - transmit the scheduled stop time or duration in the Charging Data.

11. An electric vehicle charging system as claimed in Claim 10, in which the second processor is configured to transmit both the scheduled start time and the scheduled stop time or duration to the charging station before current is advertised to the vehicle.

12. A method of charging an electric vehicle using a system comprising a charging station and a charging station management system, the method comprising:

   - electrically connecting the electric vehicle to the charging station;
   - operating the charging station under a first communication protocol to communicate with the electric vehicle to obtain a vehicle ID and an initial state of charge of the electric vehicle;
   - transmitting the vehicle ID and initial state of charge data from the charging station to the charging station management system;
   - transmitting from the charging station management system to the charging station Charging Data including a time at which the charging station should advertise available current to the electric vehicle;
   - operating the charging station under a second communication protocol to advertise available current to the electric vehicle;
   - using the charging station to measure vehicle power consumption data during charging of the electric vehicle; and
   - transmitting the vehicle power consumption data from the charging station to the charging station management system.

13. A method as claimed in Claim 12, further comprising using the charging station management system to calculate an updated state of charge based on the initial state of charge and the vehicle power consumption data.

**14.** A method as claimed in Claim 12 or Claim 13, in which the first communication protocol is in accordance with ISO 15118 or DIN SPEC 70121, and the second communication protocol is in accordance with IEC 61851 or SAE J1772, and communications between the charging station and the charging station management system use open charge point protocol (OCPP).

**15.** A method as claimed in any one of Claims 12 to 14, in which the Charging Data comprises a charging schedule including a charging start time and a charging stop time or charging duration.

**16.** A method as claimed in Claim 13, further comprising:

- transmitting from the charging station management system to a user device the initial state of charge and the updated state of charge; and
- displaying on a screen of the user device the initial state of charge and the updated state of charge.

**17.** A method as claimed in any one of Claims 12 to 16 further comprising:

- transmitting to the charging station management system user preferences data;
- using the charging station management system to calculate a charge requirement of the vehicle based on the initial state of charge of the vehicle;
- using the charging station management system to schedule a start time for vehicle charging based on the calculated charge requirement of the electric vehicle and the user preferences data;
- transmitting the scheduled start time in the Charging Data;
- using the charging station management system to schedule a stop time at which vehicle charging is terminated based on the calculated charge requirement of the vehicle and the user preferences data; and
- transmitting the scheduled stop time in the Charging Data.

**18.** A method as claimed in Claim 17, in which the charging station management system transmits both the scheduled start time and the scheduled stop time to the charging station before AC power is supplied to the vehicle.

Fig. 1

Fig. 2

30 — Vehicle plugged in

32 — Detect vehicle connected to Charging Station

34 — Enable communications using first protocol

36 — Obtain Initial Vehicle Data from vehicle

38 — Transmit Initial Vehicle Data to charging station management system (CSMS)

40 — Disable communications using first protocol

42 — Enable communications using second protocol

44 — Receive Charging Data from CSMS

46 — Advertise available current to vehicle

48 — Measure power consumption of vehicle

50 — Transmit power consumption data to CSMS

52 — Unplug Vehicle

Fig. 3

60 — Receive Initial Vehicle Data from charging station (CS)

62 — User preferences/vehicle profile exists?

Obtain user preferences / vehicle profile

64

66 — Optionally, calculate vehicle charge requirement

68 — Transmit Charging Data to CS

70 — Transmit vehicle state of charge to user device

72 — Receive power consumption data from CS

74 — Calculate updated state of charge

76 — Terminate session

Fig. 4

**Europäisches Patentamt**
**European Patent Office**
**Office européen des brevets**

# EUROPEAN SEARCH REPORT

Application Number

EP 22 16 7929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/170902 A1 (TSUCHIYA YOSHIYUKI [JP]) 10 June 2021 (2021-06-10) * abstract * * paragraphs [0003] - [0130] * * figures 1-7 * | 1-18 | INV. B60L53/14 B60L53/62 B60L53/68 |
| X | US 2021/261015 A1 (WANG JOHN C [TW]) 26 August 2021 (2021-08-26) * abstract * * paragraphs [0002] - [0091] * * figures 1-8B * | 1-18 | |
| X | US 2021/281096 A1 (MAEDA ERI IZUMI [US] ET AL) 9 September 2021 (2021-09-09) * abstract * * paragraphs [0002] - [0072] * * figures 1-5 * | 1-18 | |
| X | US 2020/180465 A1 (WATSON DAVID TIMOTHY PATRICK [GB]) 11 June 2020 (2020-06-11) * the whole document * | 1-18 | |
| X | US 2021/284039 A1 (ANDO TORU [JP] ET AL) 16 September 2021 (2021-09-16) * the whole document * | 1-18 | TECHNICAL FIELDS SEARCHED (IPC) B60L |
| X | US 2010/211643 A1 (LOWENTHAL RICHARD [US] ET AL) 19 August 2010 (2010-08-19) * the whole document * | 1-18 | |
| A | US 2019/039467 A1 (HORTOP MATTHEW [US] ET AL) 7 February 2019 (2019-02-07) * abstract * * paragraphs [0001] - [0070] * * figures 1A-6 * | 1-18 | |

The present search report has been drawn up for all claims

| Place of search | Date of completion of the search | Examiner |
|---|---|---|
| The Hague | 9 September 2022 | Hagan, Colm |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 7929

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2022

| Patent document cited in search report | | Publication date | Patent family member(s) | | Publication date |
|---|---|---|---|---|---|
| US 2021170902 | A1 | 10-06-2021 | CN | 112937321 A | 11-06-2021 |
| | | | DE | 102020132755 A1 | 10-06-2021 |
| | | | JP | 2021093831 A | 17-06-2021 |
| | | | US | 2021170902 A1 | 10-06-2021 |
| US 2021261015 | A1 | 26-08-2021 | CN | 113291188 A | 24-08-2021 |
| | | | TW | 202133099 A | 01-09-2021 |
| | | | US | 2021261015 A1 | 26-08-2021 |
| US 2021281096 | A1 | 09-09-2021 | NONE | | |
| US 2020180465 | A1 | 11-06-2020 | CN | 111284353 A | 16-06-2020 |
| | | | US | 2020180465 A1 | 11-06-2020 |
| US 2021284039 | A1 | 16-09-2021 | CN | 113401007 A | 17-09-2021 |
| | | | JP | 2021150988 A | 27-09-2021 |
| | | | US | 2021284039 A1 | 16-09-2021 |
| US 2010211643 | A1 | 19-08-2010 | AU | 2010216049 A1 | 13-10-2011 |
| | | | AU | 2016208355 A1 | 18-08-2016 |
| | | | AU | 2018203068 A1 | 24-05-2018 |
| | | | EP | 2399216 A1 | 28-12-2011 |
| | | | JP | 5432292 B2 | 05-03-2014 |
| | | | JP | 2012518239 A | 09-08-2012 |
| | | | US | 2010211643 A1 | 19-08-2010 |
| | | | US | 2019152339 A1 | 23-05-2019 |
| | | | WO | 2010096502 A1 | 26-08-2010 |
| US 2019039467 | A1 | 07-02-2019 | NONE | | |

EPO FORM P0459

For more details about this annex : see Official Journal of the European Patent Office, No. 12/82